# EUROPÄISCHE PATENTSCHRIFT

(11) **EP 2 917 710 B1**
(45) Veröffentlichungstag und Bekanntmachung des Hinweises auf die Patenterteilung: **01.08.2018**
(21) Anmeldenummer: 13773211.1
(22) Anmeldetag: 27.09.2013
(51) Int. Cl.: G01K 1/08

(54) **TEMPERATURSENSORSYSTEM UND VERFAHREN ZUR HERSTELLUNG EINES TEMPERATURSENSORSYSTEMS**
TEMPERATURE SENSOR SYSTEM AND METHOD FOR PRODUCING A TEMPERATURE SENSOR SYSTEM
SYSTÈME CAPTEUR DE TEMPÉRATURE ET PROCEDE DE PRODUCTION D'UN SYSTÈME CAPTEUR DE TEMPÉRATURE

(30) Priorität: 12.11.2012 DE 102012110858
(43) Veröffentlichungstag der Anmeldung: 16.09.2015
(73) Patentinhaber: Epcos AG, 81671 München (DE)
(72) Erfinder: IHLE, Jan, A-8074 Raaba-Grambach (AT); BARD, Oliver, 14612 Falkensee (DE); MEHLIG, Steffen, 14193 Berlin (DE); GRUNDMANN, Wolfgang, 16547 Birkenwerder (DE)
(74) Vertreter: Epping - Hermann - Fischer
(86) Internationale Anmeldenummer: PCT/EP2013/070256
(87) Internationale Veröffentlichungsnummer: WO 2014/072126

(56) Entgegenhaltungen:
- DE-A1-102004 018 354
- DE-A1-102004 035 628
- DE-B3- 10 340 636

## Beschreibung

Es wird ein Temperatursensorsystem angegeben. Weiterhin wird ein Verfahren zur Herstellung eines Temperatursensorsystems angegeben.

Die Messung von Temperaturen für die Überwachung und Regelung in unterschiedlichsten Anwendungen erfolgt beispielsweise mit keramischen Heißleiter-Thermistorelementen (NTC thermistor, "negative temperature coefficient thermistor"), Silizium-Temperatursensoren (zum Beispiel sogenannten KTY-Temperatursensoren), Platin-Temperatursensoren (PRTD, "platinum resistance temperature detector") oder Thermoelementen (TC, "Thermocouple").

Für eine leichte Montage in einer Anwendung, eine ausreichende mechanische Stabilität und zum Schutz des eigentlichen Temperatursensorelements gegen äußere Einflüsse sowie zur Vermeidung von Korrosion durch aggressive Medien erfolgt der Einbau in Gehäusen, die üblicherweise aus Kunststoffen, aus einfachen Metallstrukturen oder aus Kunststoff-Metall-Verbunden bestehen. Für den elektrischen Anschluss sind üblicherweise Steckkontakte und/oder Leitungszuführungen in den Gehäusen integriert. Geeignete Abdichtungen solcher Systeme erfolgen unter Verwendung von Dichtungen, Vergussmaterialien und/oder Klebstoffen.

Sensorsysteme mit Kunststoff- oder Polymergehäusen können jedoch nicht für die Messung von sehr hohen Temperaturen eingesetzt werden. Die maximalen Einsatztemperaturen solcher Systeme mit Kunststoff- oder Polymergehäusen sind auf cirka 200 °C bis 250 °C begrenzt. Hingegen haben die wesentlich temperaturstabileren Metalle den Nachteil, dass komplexe Gehäuseformen sehr schwer zu realisieren sind und somit meist die geometrischen Anforderungen für die Anwendung nicht erfüllt werden können. Weiterhin sind Sensorsysteme mit Metallgehäusen aufgrund von Korrosionserscheinungen nur begrenzt in besonders aggressiven Medien einsetzbar. Ein weiterer großer Nachteil der so aufgebauten Systeme ist deren verzögerte Ansprechzeit aufgrund zusätzlicher konstruktionsbedingter Wärmeübergänge und einer geringen Wärmeleitung der verwendeten Materialien.

Aus der Druckschrift EP 2 420 807 A2 ist ein Sensorsystem mit einem Metallgehäuse bekannt.

In der Druckschrift JP 2010 032 237 A ist ein Sensorsystem mit einer Keramikhülse beschrieben.

In der Druckschrift DE 102004018354 A1 ist ein Messfühler mit einer Dichtung und einem Führungsteil zum Führen von Anschlussleitungen beschrieben. Die Dichtung und das Führungsteil sind separat zu einem Gehäuse ausgebildet.

Es ist eine zu lösende Aufgabe zumindest einiger Ausführungsformen ein Temperatursensorsystem anzugeben, das eine hohe Robustheit sowie eine geringe Ansprechzeit aufweist. Eine weitere Aufgabe zumindest einiger Ausführungsformen ist es, ein Verfahren zur Herstellung eines Temperatursensorsystems anzugeben.

Diese Aufgaben werden durch einen Gegenstand und ein Verfahren gemäß den unabhängigen Patentansprüchen gelöst.

Vorteilhafte Ausführungsformen und Weiterbildungen der Gegenstände gehen weiterhin aus den abhängigen Patentansprüchen, der nachfolgenden Beschreibung und aus den Zeichnungen hervor.

Ein Temperatursensorsystem gemäß zumindest einer Ausführungsform weist ein Temperaturfühlerelement auf, das ein Sensorelement und elektrische Zuleitungen aufweist. Das Sensorelement kann beispielsweise ein Thermistorelement, ein Silizium- oder Platin-Sensorelement oder ein Thermoelement sein.

Weiterhin weist das Temperatursensorsystem ein erstes keramisches Gehäuseteil auf. Das erste keramische Gehäuseteil weist ein hülsenförmiges Unterteil mit einem geschlossenen unteren Ende und einem offenen oberen Ende sowie ein mit dem offenen oberen Ende verbundenes Oberteil auf. Das geschlossene untere Ende des hülsenförmigen Unterteils kann an der Außenseite des ersten keramischen Gehäuseteils beispielsweise als eine konisch zulaufende Spitze oder abgerundete Spitze des hülsenförmigen Unterteils ausgebildet sein. Das Sensorelement des Temperaturfühlerelements ist vorzugsweise im hülsenförmigen Unterteil angeordnet. Beispielsweise kann das Sensorelement innerhalb des hülsenförmigen Unterteils in der Nähe des geschlossenen unteren Endes angeordnet sein, wobei die elektrischen Zuleitungen vom Sensorelement aus in Richtung des offenen oberen Endes verlaufen.

Gemäß einer weiteren Ausführungsform weist das mit dem offenen oberen Ende verbundene Oberteil des ersten keramischen Gehäuseteils Aussparungen auf, in denen die elektrischen Zuleitungen des Temperaturfühlerelements zumindest teilweise angeordnet und geführt sind. Die Aussparungen können zum Beispiel in Form von innen liegenden Taschen oder Vertiefungen, die der Führung und Aufnahme der elektrischen Zuleitungen dienen, ausgeführt sein.

Gemäß einer weiteren Ausführungsform sind das Unterteil und das Oberteil des ersten keramischen Gehäuseteils einstückig ausgebildet. Beispielsweise können das Unterteil und das Oberteil in einem gemeinsamen Fertigungsprozess hergestellt sein. Das Unterteil und das Oberteil sind insbesondere nicht zwei getrennt hergestellte Bauteile, die mittels eines Verbindungsverfahrens, beispielsweise mit Hilfe eines Befestigungsmittels, miteinander verbunden werden. Vorteilhafterweise sind zwischen dem Unterteil und dem Oberteil des ersten keramischen Gehäuseteils keine Schnittstellen vorhanden.

Gemäß einer weiteren Ausführungsform ist das erste keramische Gehäuseteil ein Spritzgussteil. Beispielsweise kann das erste keramische Gehäuseteil mittels der sogenannten keramischen Spritzgusstechnologie hergestellt sein. Mit Hilfe der keramischen Spritzgusstechnologie können vorteilhafterweise sehr komplexe, an kundenspezifische Anforderungen angepasste keramische Gehäusebauformen, die eine hohe mechanische Festigkeit aufweisen, präzise und reproduzierbar hergestellt werden.

Gemäß einer weiteren Ausführungsform weist das erste keramische Gehäuseteil ein keramisches Material mit einer hohen Wärmeleitfähigkeit auf. Beispielsweise kann das erste keramische Gehäuseteil Aluminiumoxid, Aluminiumnitrid oder Siliciumcarbid aufweisen oder aus Aluminiumoxid, Aluminiumnitrid oder Siliciumcarbid bestehen. Vorteilhafterweise besitzen diese Materialien eine sehr hohe mechanische Festigkeit und verleihen dem Temperatursensorsystem die notwendige mechanische Stabilität, um die geforderten Belastungen in der Anwendung zu erfüllen. Weiterhin weist das Temperatursensorsystem aufgrund der Materialeigenschaften des ersten keramischen Gehäuseteils sehr geringe Ansprechzeiten auf. Die Ansprechzeiten liegen beispielsweise je nach Wandstärke und Material des ersten keramischen Gehäuseteils bei unter 6 Sekunden, vorteilhafterweise bei unter 3 Sekunden.

Gemäß einer weiteren Ausführungsform weist das erste keramische Gehäuseteil im Bereich des hülsenförmigen Unterteils Wandstärken zwischen 0,3 mm und 3 mm auf. Gemäß einer besonders bevorzugten Ausführungsform weist das erste keramische Gehäuseteil im Bereich des hülsenförmigen Unterteils Wandstärken zwischen 0,5 mm und 1,5 mm auf. Dadurch kann eine besonders geringe Ansprechzeit des Temperatursensorsystems bei einer zugleich ausreichenden Stabilität erzielt werden.

Gemäß einer weiteren Ausführungsform weist das Temperatursensorsystem ein zweites keramisches Gehäuseteil auf, das mit dem Oberteil des ersten keramischen Gehäuseteils verbunden ist. Das zweite keramische Gehäuseteil verschließt vorzugsweise das Temperatursensorsystem. Das Oberteil kann beispielsweise einen Fortsatz aufweisen, der in das offene obere Ende des hülsenförmigen Unterteils ragt und mittels dessen das Oberteil am Unterteil fixiert werden kann. Vorzugsweise weist der Fortsatz Aussparungen auf, in denen die elektrischen Zuleitungen des Temperaturfühlerelements zumindest teilweise angeordnet und geführt sind. Somit können das erste und das zweite keramische Gehäuseteil mit integrierten und vorzugsweise geometrisch an die elektrischen Zuleitungen angepassten Leitungsführungen versehen sein. Weiterhin können das erste und zweite keramische Gehäuseteil Dichtflächen, die beispielsweise mit einem Verbindungsstoff für eine Verklebung gefüllt werden können, versehen sein.

Gemäß einer weiteren Ausführungsform weist das zweite keramische Gehäuseteil das gleiche Material wie das erste keramische Gehäuseteil auf. Das zweite keramische Gehäuseteil ist vorzugsweise wie das erste keramische Gehäuse ein Spritzgussteil, das mittels der keramischen Spritzgusstechnologie hergestellt sein kann.

Gemäß einer weiteren Ausführungsform sind das erste und das zweite keramische Gehäuseteil durch einen Verbindungsstoff miteinander verbunden. Der Verbindungsstoff kann, beispielsweise abhängig von der Einsatztemperatur des Temperatursensorsystems ein Polymer, Glas oder einen keramischen Kleber aufweisen oder ein Polymer, Glas oder keramischer Kleber sein. Vorzugsweise sind das erste und das zweite keramische Gehäuseteil mittels des Verbindungsstoffes über Dichtflächen kraft- und formschlüssig miteinander verbunden.

Gemäß einer weiteren Ausführungsform weist das Temperatursensorsystem ein Vergussmaterial auf, das im Unterteil des ersten keramischen Gehäuseteils angeordnet ist und das Sensorelement umschließt. Vorzugsweise ist das Sensorelement vollständig vom Vergussmaterial umschlossen. Das Vergussmaterial kann beispielsweise ein Polymer, vorzugsweise ein temperaturstabiles Polymer, ein Glas oder ein zementartiges Material, wie zum Beispiel Aluminiumoxidzement, aufweisen oder aus einem dieser Materialien bestehen. Dabei hängt die Wahl des Vergussmaterials insbesondere von der Einsatztemperatur des Temperatursensorsystems ab. Beispielsweise kann das Vergussmaterial bei einer Einsatztemperatur bis zu 300 °C ein temperaturstabiles Polymer aufweisen oder daraus bestehen.

Bei Einsatztemperaturen bis zu 1000 °C wird insbesondere Glas oder ein zementartiges Material bevorzugt.

Gemäß einer weiteren Ausführungsform weisen das Vergussmaterial und der Verbindungsstoff das gleiche Material auf. Beispielsweise kann als Vergussmaterial ein temperaturstabiles Vergussmaterial mit Klebeeigenschaften eingesetzt werden. Das Material für die Verklebung des ersten und zweiten keramischen Gehäuseteils kann auch gleichzeitig zur Fixierung der elektrischen Zuleitungen und/oder von mit den elektrischen Zuleitungen verbundenen Anschlussleitungen und/oder zur Füllung einer Verbindungsstelle zu den elektrischen Zuleitungen und Leitungsführungen dienen.

Gemäß einer weiteren Ausführungsform weisen die elektrischen Zuleitungen des Temperaturfühlerelements ein oder mehrere temperaturstabile Materialien, vorzugsweise mit geringer Korrosionsneigung, auf oder bestehen aus einem oder mehreren solchen Materialien. Die elektrischen Zuleitungen können zum Beispiel Drähte aus Eisen oder aus einem Edelmaterial, wie zum Beispiel Platin, Gold oder Silber, sein. Weiterhin können die elektrischen Zuleitungen Drähte aus einer hochtemperaturstabilen Stahllegierung, beispielsweise mit einem hohen Gehalt an Chrom und/oder Nickel, sein oder als mit Nickel ummantelte Kupferdrähte ausgebildet sein.

Gemäß einer weiteren Ausführungsform sind die elektrischen Zuleitungen mit Anschlussleitungen verbunden. Vorzugsweise sind die Anschlussleitungen temperaturstabil. Beispielsweise können die Anschlussleitungen ebenfalls zumindest teilweise in den Aussparungen des Oberteils des ersten keramischen Gehäuseteils geführt sein. Die Verbindung der elektrischen Zuleitungen mit den Anschlussleitungen erfolgt beispielsweise über Hochtemperaturlötprozesse, wie zum Beispiel Hartlöten, Crimpen oder Verschweißen.

Gemäß einer weiteren Ausführungsform sind die Anschlussleitungen zumindest in Teilbereichen ummantelt. Beispielsweise weisen die Anschlussleitungen eine Ummantelung auf, die zum Beispiel bis Einsatztemperaturen von 300 °C ein Polymer aufweisen oder aus einem Polymer bestehen. Bei Einsatztemperaturen über 300 °C, beispielsweise solchen zwischen 300 °C und 1000 °C, kann die Ummantelung Glasfaser aufweisen oder daraus bestehen. Gemäß einer weiteren Ausführungsform sind die Anschlussleitungen als metallummantelte mineralisolierte Leitungen ausgeführt. Eine Verbindung der Anschlussleitungen mit einem elektrischen Interface kann beispielsweise, je nach Anforderung, über eine Steckverbindung oder über Crimpen, Löten oder Schweißen erfolgen.

Gemäß einer weiteren Ausführungsform weist das Temperatursensorsystem einen Austrittsbereich auf, in dem die elektrischen Zuleitungen und/oder die Anschlussleitungen aus dem ersten und/oder zweiten keramischen Gehäuseteil austreten. Vorzugsweise ist der Austrittsbereich mittels einer Abdichtung verschlossen. Die Abdichtung kann beispielsweise ein Polymer, ein Glas oder ein keramisches Vergussmaterial aufweisen oder aus einem dieser Materialien bestehen. Dabei eignet sich insbesondere bei Einsatztemperaturen bis zu 300 °C eine Abdichtung mit einem Polymer und bei Einsatztemperaturen über 300 °C eine Abdichtung mittels Glas. Gemäß einer bevorzugten Ausführungsform weist die Abdichtung das gleiche Material wie das Vergussmaterial und/oder wie der Verbindungsstoff auf.

Gemäß einer weiteren Ausführungsform ist das Sensorelement ein NTC-Sensorelement. NTC-Sensorelemente zeichnet sich insbesondere durch ihre geringen Herstellkosten aus. Das NTC-Sensorelement kann beispielsweise mit einer Glasumhüllung versehen sein.

Gemäß einer weiteren Ausführungsform weist das Sensorelement eine Perowskitstruktur auf. Beispielsweise kann das Sensorelement eine Perowskitstruktur umfassend die Elemente Y, Ca, Cr, Al, O aufweisen. Bevorzugt weist das Sensorelement Keramikmaterialien mit einer Perowskitstruktur der allgemeinen chemischen Formel ABO₃ auf. Insbesondere für den Einsatz bei hohen Anwendungstemperaturen, beispielsweise solchen zwischen 300 °C und 1000 °C, werden derartige Sensorelemente bevorzugt. Besonders bevorzugt weist das funktionskeramische Sensorelement die Zusammensetzung (Y₁₋ₓCaₓ) (Cr_{1-y}Al_{y})O₃ mit x = 0,03 bis 0, 05 und y = 0,85 auf.

Gemäß einer weiteren Ausführungsform weist das Sensorelement eine Spinellstruktur auf. Beispielsweise kann das Sensorelement eine Spinellstruktur umfassend die Elemente Ni, Co, Mn, O aufweisen. Bevorzugt weist das Sensorelement Keramikmaterialien mit einer Spinellstruktur der allgemeinen chemischen Formel AB₂O₄ beziehungsweise B(A,B)O₄ auf. Derartige Sensorelemente werden insbesondere für einen Einsatz bei geringen Anwendungstemperaturen, beispielsweise solchen bis zu 300 °C, bevorzugt. Besonders bevorzugt weist das funktionskeramische Sensorelement die Zusammensetzung CO_{3-(x+y)}NiₓMn_{y}O₄ mit x = 1,32 und y = 1,32 auf.

Die Vorteile des hier beschriebenen Temperatursensorsystems liegen insbesondere in der sehr präzisen Ausführung der Gehäusedimension, die eine einfache und standardisierte Montage ohne zusätzliche Systemelemente ermöglicht, bei gleichzeitig sehr kurzen Ansprechzeiten, einer sehr hohen mechanischen und chemischen Robustheit sowie einer extremen Langzeitstabilität. Dadurch kann ein das hier beschriebene, durch das erste und zweite keramische Gehäuseteil keramisch gekapselte Temperatursensorsystemen auch bei hohen Anwendungstemperaturen und in besonders aggressiven Medien beziehungsweise Gasen eingesetzt werden.

Weiterhin wird ein Verfahren zur Herstellung eines Temperatursensorsystems angegeben. Das dadurch herstellbare oder hergestellte Temperatursensorsystem kann eines oder mehrere Merkmale der vorgenannten Ausführungsformen aufweisen. Die vorher und im Folgenden beschriebenen Ausführungsformen gelten gleichermaßen für des Temperatursensorsystem wie auch für das Verfahren zur Herstellung des Temperatursensorsystems.

Gemäß einer Ausführungsform werden das Temperaturfühlerelement sowie das erste und das zweite keramische Gehäuseteil, die beispielsweise mittels keramischer Spritzgusstechnologie hergestellt werden, bereitgestellt. Bei die Herstellung des ersten und zweiten keramischen Gehäuseteils wird beispielsweise ein keramischer Feedstock, der ein strukturkeramisches Pulver, wie zum Beispiel Aluminiumoxidpulver, Aluminiumnitridpulver oder Siliciumcarbidpulver, und ein organisches Bindemittel aufweist, in eine entsprechende Form gespritzt. Die daraus hergestellten sogenannten Grünkörper werden vorzugsweise anschließend in einem Entbinderungsprozess, der zweistufig, das heißt wässrig und thermisch oder einstufig, das heißt nur thermisch, ist, weitgehend vom organischen Anteil befreit. Nachfolgend werden die entbinderten Körper vorzugsweise bei geeigneter Temperatur, beispielsweise im Falle von Aluminiumoxid je nach Reinheit bei cirka 1600 °C bis 1700 °C, gesintert.

Gemäß einer Ausführungsform wird das Temperaturfühlerelement im hülsenförmigen Unterteil des ersten keramischen Gehäuseteils angeordnet. Danach wird Vergussmaterial in das erste keramische Gehäuseteil derart eingebracht, dass das Sensorelement vom Vergussmaterial vollständig umschlossen ist. Weiterhin wird ein Teil der elektrischen Zuleitung in den Aussparungen des Oberteils des ersten keramischen Gehäuseteils angeordnet. Anschließend wird das Oberteil des ersten keramischen Gehäuseteils mit dem zweiten keramischen Gehäuseteil mittels eines Verbindungsstoffes, der zum Beispiel ein Polymer, ein Glas oder einen keramischen Kleber aufweist, verbunden. Gemäß einer bevorzugten Ausführungsform weisen das Vergussmaterial und der Verbindungsstoff das gleiche Material auf.

Gemäß einer weiteren Ausführungsform werden die elektrischen Zuleitungen des Temperaturfühlerelements mittels Hartlöten, Crimpen oder Schweißen mit den Anschlussleitungen verbunden. Weiterhin werden vorzugsweise Teilbereiche der elektrischen Zuleitungen und/oder der Anschlussleitungen vor dem Verbinden des Oberteils mit dem zweiten keramischen Gehäuseteil teilweise in den Aussparungen des Oberteils des ersten keramischen Gehäuseteils angeordnet.

Gemäß einer weiteren Ausführungsform werden die Anschlussleitungen anschließend in einem Austrittsbereich aus dem ersten und/oder zweiten keramischen Gehäuseteil mittels eines Polymers oder mittels Glas abgedichtet.

Weitere Vorteile und vorteilhafte Ausführungsformen des Temperatursensorsystems ergeben sich aus den im Folgenden in Verbindung mit den Figuren 1 bis 7 beschriebenen Ausführungsformen.

Es zeigen:
- Figuren 1 bis 4: schematische Darstellungen eines Temperatursensorsystems gemäß einem Ausführungsbeispiel,
- Figur 5: eine schematische Schnittansicht des Temperatursensorsystems der Figuren 1 bis 4,
- Figur 6: eine schematische Darstellung des Temperatursensorsystems der Figuren 1 bis 4 in Form einer Explosionsdarstellung und
- Figur 7: ein Verfahren zur Herstellung eines Temperatursensorsystems gemäß einem weiteren Ausführungsbeispiel.

In den Ausführungsbeispielen und Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen. Vielmehr können einzelne Elemente, wie zum Beispiel Schichten, Bauteile und Bereiche zur besseren Darstellbarkeit und/oder zum besseren Verständnis übertrieben dick oder groß dimensioniert dargestellt sein.

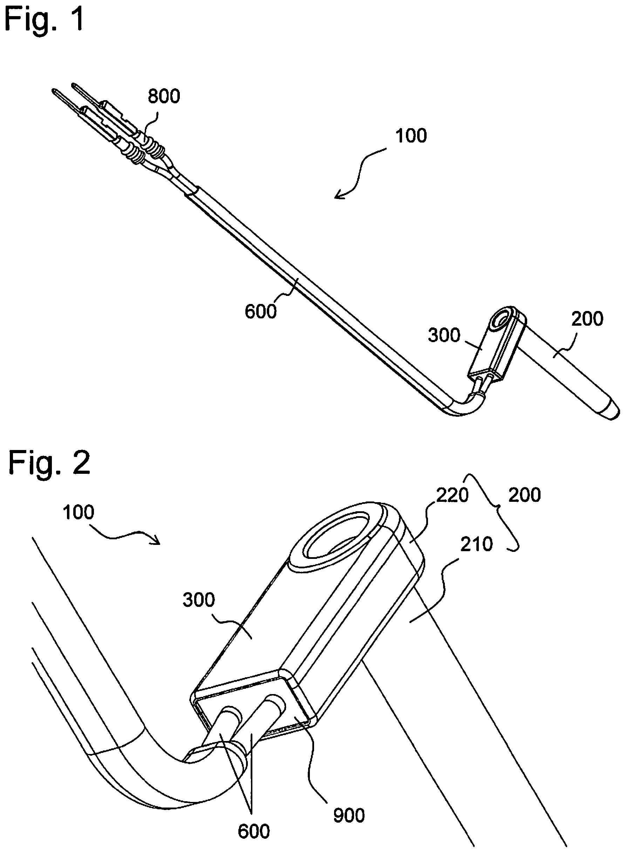

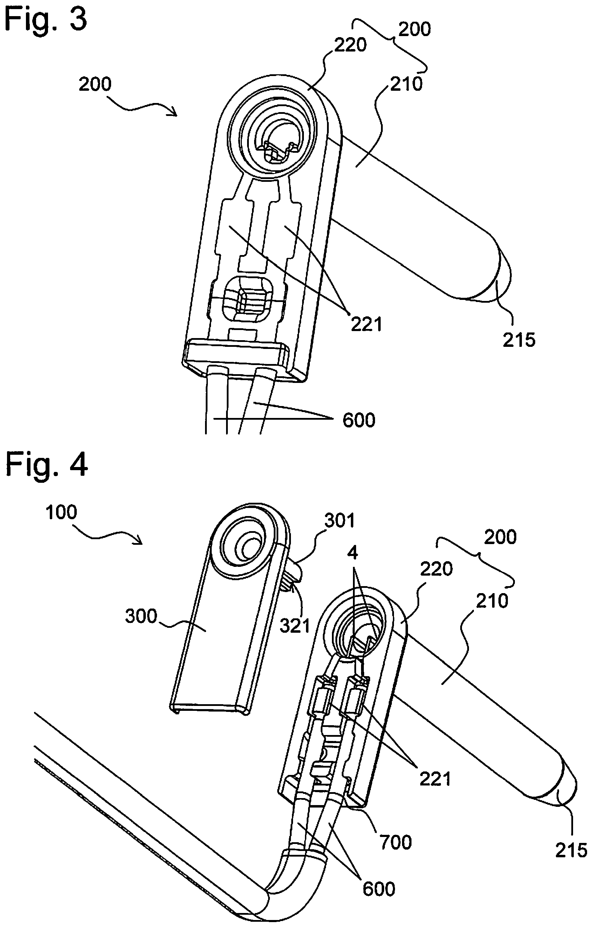

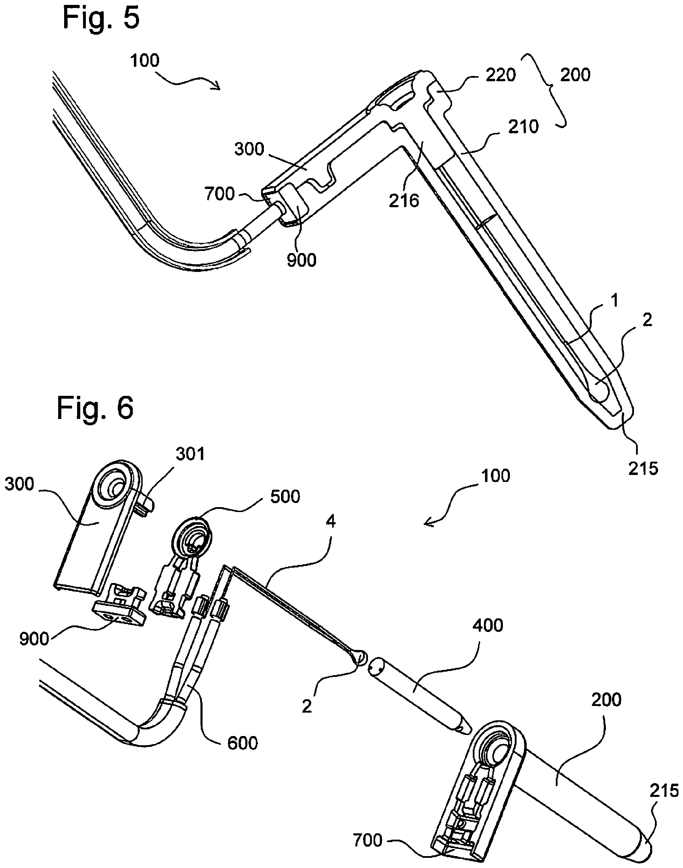

Die Figuren 1 bis 4 zeigen verschiedene Ansichten eines hier beschriebenen Temperatursensorsystems 100 gemäß einem Ausführungsbeispiel. Dabei ist das Temperatursensorsystem 100 in der Figur 3 ohne das zweite keramische Gehäuseteil 300 dargestellt. Figur 5 zeigt das Temperatursensorsystems 100 aus den Figuren 1 bis 4 in der Schnittansicht und in Figur 5 ist das Temperatursensorsystems 100 in Form einer Explosionsdarstellung gezeigt. Die nachfolgende Beschreibung bezieht sich gleichermaßen auf die Figuren 1 bis 6.

Das Temperatursensorsystem 100 weist ein Temperaturfühlerelement 1 auf, das ein Sensorelement 2 und elektrische Zuleitungen 4 umfasst. Das Sensorelement 2 ist im gezeigten Ausführungsbeispiel als NTC-Sensorelement ausgeführt und mit einer Glasumhüllung versehen.

Das Sensorelement 2 weist eine Perowskitstruktur umfassend die Elemente Y, Ca, Cr, Al, O auf. Insbesondere weist das Sensorelement 2 die Zusammensetzung (Y₁₋ₓCaₓ) (Cr_{1-y}Al_{y})O₃ mit x = 0,03 bis 0,05 und y = 0,85 auf. Dadurch ist das Temperatursensorsystem 100 vorteilhafterweise für den Einsatz bei hohen Anwendungstemperaturen, beispielsweise solchen zwischen 300 °C und 1000 °C, geeignet. Alternativ kann das Sensorelement 2 eine Spinellstruktur aufweisen.

Alternativ zu einem NTC-Sensorelement kann das Sensorelement 2 beispielsweise ein Silizium-Sensorelement, ein Platin-Sensorelement oder ein Thermoelement sein.

Weiterhin weist das Temperatursensorsystem 100 ein erstes keramisches Gehäuseteil 200 auf, das ein hülsenförmiges Unterteil 210 mit einem geschlossenen unteren Ende 215 und einem offenen oberen Ende 216 sowie ein mit dem offenen oberen Ende 216 verbundenes Oberteil 220 aufweist. Das hülsenförmige Unterteil 210 und das Oberteil 220 bilden zusammen einen "L-förmigen" Körper, der einstückig ausgebildet ist. Das erste keramische Gehäuseteil 200 ist ein Spritzgussteil, das mittels eines keramischen Spritzgussverfahrens hergestellt ist. Das erste keramische Gehäuseteil 200 weist Aluminiumoxid auf. Alternativ kann das erste keramische Gehäuseteil 200 auch Aluminiumnitrid oder Siliciumcarbid aufweisen oder aus einem der genannten Materialien bestehen.

Das Sensorelement 2 ist im hülsenförmige Unterteil 210 in der Nähe des geschlossenen unteren Endes 215 angeordnet. Die mit dem Sensorelement 2 verbundenen elektrischen Zuleitungen 4 verlaufen in Richtung des offenen oberen Endes 216. Das Oberteil 220 des ersten keramischen Gehäuseteils 200 weist Aussparungen 221 auf, in denen die elektrischen Zuleitungen 4 des Temperaturfühlerelements 1 zumindest teilweise angeordnet und geführt sind.

Das Temperatursensorsystem 100 weist weiterhin ein zweites keramischen Gehäuseteil 300 auf, das mit dem Oberteil 220 des ersten keramischen Gehäuseteils 200 verbunden ist. Das zweite keramische Gehäuseteil 300 weist einen Fortsatz 301 auf, der Aussparungen 321 aufweist, in denen die elektrischen Zuleitungen zumindest teilweise angeordnet und geführt sind. Das zweite keramische Gehäuseteil 300 weist ebenfalls Aluminiumoxid auf und ist auch als Spritzgussteil hergestellt.

Das erste und das zweite keramische Gehäuseteil 200, 300 sind mittels eines Verbindungsstoffes 500 miteinander verbunden. Der Verbindungsstoff 500 weist ein Polymer auf. Alternativ kann der Verbindungsstoff 500 ein Glas oder einen keramischen Kleber aufweisen oder aus einem der genannten Materialien bestehen.

Im hülsenförmigen Unterteil 210 des ersten keramischen Gehäuseteils 200 ist ein Vergussmaterial 400 angeordnet, das das Sensorelement 2 des Temperaturfühlerelements 1 umschließt. Das Vergussmaterial 400 weist ein Polymer auf. Alternativ kann das Vergussmaterial 400 ein Glas oder ein zementartiges Material, wie zum Beispiel Aluminiumoxidzement aufweisen oder aus einem der genannten Materialien bestehen.

Die elektrischen Zuleitungen 4 sind mit temperaturstabilen Anschlussleitungen 600 mittels Hartlöten verbunden. Alternativ können die elektrischen Zuleitungen 4 mit den Anschlussleitungen 600 mittels Crimpen oder Verschweißen verbunden sein. Die Anschlussleitungen 600 weisen eine Ummantelung auf, die aus einem Polymer besteht. Weiterhin ist es möglich, dass die Ummantelung der Anschlussleitungen 600 aus Glasfaser besteht oder dass die Anschlussleitungen 600 als metallummantelte mineralisolierte Leitungen ausgeführt sind. Die Anschlussleitungen 600 sind mittels Crimpen mit einer Steckverbindung 800 verbunden. Alternativ kann die Verbindung der Anschlussleitungen 600 und der Steckverbindung 800 mittels Löten oder Schweißen erfolgen.

Das Temperatursensorsystem 100 weist einen Austrittsbereich 700 auf, in dem die Anschlussleitungen 600 aus dem ersten und zweiten keramischen Gehäuseteil 200, 300 austreten. Der Austrittsbereich 700 ist mittels einer Abdichtung 900 verschlossen, die ein Polymer aufweist. Alternativ kann die Abdichtung 900 ein Glas oder ein keramisches Vergussmaterial aufweisen oder aus einem der genannten Materialien bestehen.

Vorteilhafterweise weist das Temperatursensorsystems 100 sehr kurzen Ansprechzeiten, eine sehr hohe mechanische sowie chemische Robustheit und einer gute Langzeitstabilität auf. Dadurch kann das Temperatursensorsystem 100 auch bei hohen Anwendungstemperaturen und in besonders aggressiven Medien beziehungsweise Gasen eingesetzt werden. Weitere Vorteile des Temperatursensorsystems 100 liegen in einer sehr präzisen Ausführung der Gehäusedimension, die eine einfache und standardisierte Montage ohne zusätzliche Systemelemente ermöglicht.

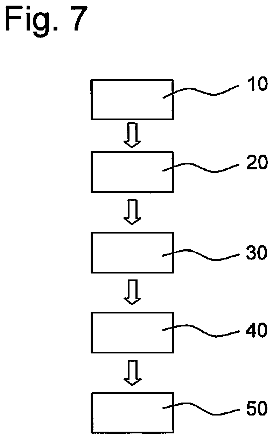

Figur 7 zeigt ein Verfahren zur Herstellung eines hier beschriebenen Temperatursensorsystems 100 gemäß einem Ausführungsbeispiel. Dabei werden in einem ersten Verfahrensschritt 10 ein Temperaturfühlerelement 1 sowie ein erstes und ein zweites keramisches Gehäuseteil 200, 300 bereitgestellt. Das erste und zweite keramische Gehäuseteil 200, 300 werden vorzugsweise mittels keramischer Spritzgusstechnologie hergestellt. Dabei wird ein keramischer Feedstock, der ein strukturkeramisches Pulver aus Aluminiumoxidpulver und einem organischen Bindemittel aufweist, in eine gewünschte Form gespritzt und die daraus entstehenden Grünkörper werden anschließend in einem Entbinderungsprozess weitgehend von organischen Anteilen befreit. Danach werden die entbinderten Körper bei 1600 °C bis 1700 °C gesintert.

Im nachfolgenden Verfahrensschritt 20 wird das Temperaturfühlerelement 1 im geschlossenen unteren Ende 215 des hülsenförmigen Unterteils 210 des ersten keramischen Gehäuseteils 200 angeordnet. Danach wird im Verfahrensschritt 30 Vergussmaterial 400 in das erste keramische Gehäuseteil 200, insbesondere in das hülsenförmige Unterteil 210, derart eingebracht, dass das Sensorelement 2 vom Vergussmaterial 400 umschlossen ist. Das Vergussmaterial 400 weist vorzugsweise ein Polymer auf. Alternativ kann das Vergussmaterial 400 ein Glas oder ein zementartiges Material, wie zum Beispiel Aluminiumoxidzement aufweisen oder aus einem der genannten Materialien bestehen. Im sich daran anschließenden Verfahrensschritt 40 wird ein Teil der elektrischen Zuleitungen 4 des Temperaturfühlerelements 1 in den Aussparungen 221 des Oberteils 200 des ersten keramischen Gehäuseteils 200 angeordnet. Danach wird das Oberteil 220 des ersten keramischen Gehäuseteils 200 im Verfahrensschritt 50 mit dem zweiten keramischen Gehäuseteil 300 mittels eines Verbindungsstoffes 500, der zum Beispiel ein Polymer, ein Glas oder einen keramischen Kleber aufweist, verbunden, wobei Bereiche der elektrischen Zuleitungen 4 in den Aussparungen 321 des Fortsatzes 301 des zweiten keramischen Gehäuseteils 300 geführt werden. Anschließend wird der Austrittsbereich 700 mittels einer Abdichtung 900, die ein Polymer aufweist, verschlossen. Alternativ kann die Abdichtung 900 auch ein Glas oder ein keramisches Vergussmaterial aufweisen oder aus einem der genannten Materialien bestehen.

Die in den Figuren gezeigten Ausführungsbeispiele können alternativ oder zusätzlich weitere Merkmale gemäß den Ausführungsformen der allgemeinen Beschreibung aufweisen.

Die Erfindung ist nicht durch die Beschreibung anhand der Ausführungsbeispiele auf diese beschränkt, sondern umfasst jedes neue Merkmal sowie jede Kombination von Merkmalen. Dies beinhaltet insbesondere jede Kombination von Merkmalen in den Patentansprüchen, auch wenn dieses Merkmal oder diese Kombination selbst nicht explizit in den Patentansprüchen oder Ausführungsbeispielen angegeben ist.

### Bezugszeichenliste

- 100: Temperatursensorsystem
- 200: erstes keramisches Gehäuseteil
- 210: Unterteil
- 215: geschlossenes unteres Ende
- 216: offenes oberes Ende
- 220: Oberteil
- 221, 321: Aussparung
- 300: zweites keramisches Gehäuseteil
- 301: Fortsatz
- 400: Vergussmaterial
- 500: Verbindungsstoff
- 600: Anschlussleitung
- 700: Austrittsbereich
- 800: Steckverbindung
- 900: Abdichtung
- 1: Temperaturfühlerelement
- 2: Sensorelement
- 4: elektrische Zuleitungen
- 10, 20, 30, 40, 50: Verfahrensschritt

## Patentansprüche

1. Temperatursensorsystem (100), aufweisend
- ein Temperaturfühlerelement (1), das ein Sensorelement (2) und elektrische Zuleitungen (4) aufweist, und
- ein erstes keramisches Gehäuseteil (200), das ein hülsenförmiges Unterteil (210) mit einem geschlossenen unteren Ende (215) und einem offenen oberen Ende (216) sowie ein mit dem offenen oberen Ende (216) verbundenes Oberteil (220) aufweist,
- wobei das Sensorelement (2) im hülsenförmigen Unterteil (210) angeordnet ist,
- wobei das Oberteil (220) Aussparungen (221) aufweist, in denen die elektrischen Zuleitungen (4) zumindest teilweise angeordnet und geführt sind,
**dadurch gekennzeichnet, dass**
das Unterteil (210) und das Oberteil (220) zusammen einen Körper bilden, der einstückig ausgebildet ist.

2. Temperatursensorsystem nach Anspruch 1, wobei das erste keramische Gehäuseteil (200) ein Spritzgussteil ist.

3. Temperatursensorsystem nach einem der vorhergehenden Ansprüche, wobei das erste keramische Gehäuseteil (200) Aluminiumoxid, Aluminiumnitrid oder Siliciumcarbid aufweist.

4. Temperatursensorsystem nach einem der vorhergehenden Ansprüche, aufweisend ein zweites keramisches Gehäuseteil (300), das mit dem Oberteil (220) des ersten keramischen Gehäuseteils (200) verbunden ist und einen Fortsatz (301) mit Aussparungen (321) aufweist, in denen die elektrischen Zuleitungen (4) zumindest teilweise angeordnet und geführt sind.

5. Temperatursensorsystem nach Anspruch 4, wobei das erste und das zweite keramische Gehäuseteil (200, 300) durch einen Verbindungsstoff (500), der ein Polymer, ein Glas oder einen keramischen Kleber aufweist, miteinander verbunden sind.

6. Temperatursensorsystem nach einem der vorhergehenden Ansprüche, aufweisend ein Vergussmaterial (400), das im Unterteil (210) des ersten keramischen Gehäuseteils angeordnet ist und das Sensorelement (2) umschließt.

7. Temperatursensorsystem nach Anspruch 6, wobei das Vergussmaterial (400) ein Polymer oder Glas oder Aluminiumoxidzement aufweist oder daraus besteht.

8. Temperatursensorsystem nach einem der vorhergehenden Ansprüche, wobei das Sensorelement (2) ein NTC-Sensorelement ist.

9. Temperatursensorsystem nach Anspruch 8, wobei das NTC-Sensorelement (2) eine Perowskitstruktur mit der Formel (Y₁₋ₓCaₓ) (Cr_{1-y}Al_{y})O₃ mit x = 0,03 bis 0,05 und y = 0,85 aufweist.

10. Temperatursensorsystem nach Anspruch 8, wobei das NTC-Sensorelement (2) eine Spinellstruktur mit der Formel CO_{3-(x+y)}NiₓMn_{y}O₄ mit x = 1,32 und y = 1,32 aufweist.

11. Verfahren zur Herstellung eines Temperatursensorsystems gemäß einem der Ansprüche 1 bis 10 mit den folgenden Schritten:
- Bereitstellen des Temperaturfühlerelements (1) sowie des ersten und eines zweiten keramischen Gehäuseteils (200, 300),
- Anordnen des Temperaturfühlerelements (1) im hülsenförmigen Unterteil (210) des ersten keramischen Gehäuseteils (200),
- Einbringen von Vergussmaterial (400) in das erste keramische Gehäuseteil (200) derart, dass das Sensorelement (2) vom Vergussmaterial (400) umschlossen ist,
- Anordnen eines Teils der elektrischen Zuleitungen (4) in den Aussparungen (221) eines Fortsatzes (301) des Oberteils (220) des ersten keramischen Gehäuseteils (200), und
- Verbinden des Oberteils (220) des ersten keramischen Gehäuseteils (200) mit dem zweiten keramischen Gehäuseteil (300) mittels eines Verbindungsstoffes (500) .

12. Verfahren gemäß Anspruch 11, wobei das Vergussmaterial (400) und der Verbindungsstoff (500) das gleiche Material aufweisen.

13. Verfahren gemäß einem der Ansprüche 11 oder 12, wobei die elektrischen Zuleitungen (4) mittels Hartlöten, Crimpen oder Schweißen mit Anschlussleitungen (600) verbunden werden, und wobei die Anschlussleitungen (600) vor dem Verbinden des Oberteils (220) mit dem zweiten keramischen Gehäuseteil (300) teilweise in den Aussparungen (221) des Fortsatzes (301) des Oberteils (220) angeordnet werden.

14. Verfahren gemäß Anspruch 13, wobei die Anschlussleitungen (600) in einem Austrittsbereich (700) aus dem ersten und/oder zweiten keramischen Gehäuseteil (200, 300) mittels eines Polymers oder mittels Glas abgedichtet werden.

## Claims

1. Temperature sensor system (100), comprising
- a temperature probe element (1) comprising a sensor element (2) and electrical feed lines (4), and
- a first ceramic housing part (200) comprising a sleeve-shaped lower part (210) with a closed lower end (215) and an open upper end (216) as well as an upper part (220) connected to the open upper end (216),
- wherein the sensor element (2) is arranged in the sleeve-shaped lower part (210),
- wherein the upper part (220) comprises recesses (221), in which the electrical feed lines (4) are arranged and guided at least in part, **characterized in that** the lower part (210) and the upper part (220) together form a body, which is formed in one piece.

2. Temperature sensor system according to Claim 1, wherein the first ceramic housing part (200) is an injection-molded part.

3. Temperature sensor system according to one of the preceding claims, wherein the first ceramic housing part (200) comprises aluminum oxide, aluminum nitride or silicon carbide.

4. Temperature sensor system according to one of the preceding claims, comprising a second ceramic housing part (300), which is connected to the upper part (220) of the first ceramic housing part (200), and an extension (301) with recesses (321) in which the electrical feed lines (4) are arranged and guided at least in part.

5. Temperature sensor system according to Claim 4, wherein the first and the second ceramic housing part (200, 300) are interconnected by a connecting substance (500) that comprises a polymer, a glass or a ceramic adhesive.

6. Temperature sensor system according to one of the preceding claims, comprising a potting material (400), which is arranged in the lower part (210) of the first ceramic housing part and encases the sensor element (2).

7. Temperature sensor system according to Claim 6, wherein the potting material (400) comprises a polymer or glass or aluminum oxide cement, or consists thereof.

8. Temperature sensor system according to one of the preceding claims, wherein the sensor element (2) is an NTC sensor element.

9. Temperature sensor system according to Claim 8, wherein the NTC sensor element (2) has a perovskite structure with the formula (Y₁₋ₓCaₓ) (Cr_{1-y}Al_{y})O₃ with x = 0.03 to 0.05 and y = 0.85

10. Temperature sensor system according to Claim 8, wherein the NTC sensor element (2) has a spinel structure with the formula CO_{3-(x,y)}NiₓMn_{y}O₄ with x = 1.32 and y = 1.32.

11. Method for producing a temperature sensor system according to one of Claims 1 to 10, comprising the following steps:
- providing the temperature probe element (1) and also the first and a second ceramic housing part (200, 300),
- arranging the temperature probe element (1) in the sleeve-shaped lower part (210) of the first ceramic housing part (200),
- introducing potting material (400) into the first ceramic housing part (200) in such a manner that the sensor element (2) is encased by the potting material (400),
- arranging part of the electrical feed lines (4) in the recesses (221) of an extension (301) of the upper part (220) of the first ceramic housing part (200), and
- connecting the upper part (220) of the first ceramic housing part (200) to the second ceramic housing part (300) by means of a connecting substance (500).

12. Method according to Claim 11, wherein the potting material (400) and the connecting substance (500) comprise the same material.

13. Method according to one of Claims 11 or 12, wherein the electrical feed lines (4) are connected by means of hard soldering, crimping or welding to connection lines (600), and wherein the connection lines (600) are arranged partly in the recesses (221) of the extension (301) of the upper part (220) prior to the connection of the upper part (220) to the second ceramic housing part (300) .

14. Method according to Claim 13, wherein the connection lines (600) are sealed by means of a polymer or by means of glass in an exit region (700) from the first and/or second ceramic housing part (200, 300).

## Revendications

1. Système (100) de capteur de température, présentant
- un élément détecteur (1) de température, qui présente un élément capteur (2) et des alimentations électriques (4), et
- une première pièce céramique (200) de boîtier, qui présente une pièce inférieure (210) en forme de manchon pourvue d'une extrémité inférieure (215) fermée et d'une extrémité supérieure (216) ouverte ainsi qu'une pièce supérieure (220) reliée à l'extrémité supérieure (216) ouverte,
- l'élément capteur (2) étant agencé dans la pièce inférieure (210) en forme de manchon,
- la pièce supérieure (220) présentant des évidements (221) dans lesquels sont disposées et guidées au moins partiellement les alimentations électriques (4),
**caractérisé en ce que** la pièce inférieure (210) et la pièce supérieure (220) forment ensemble un corps réalisé d'une seule pièce.

2. Système de capteur de température selon la revendication 1, la première pièce céramique (200) de boîtier étant une pièce moulée par injection.

3. Système de capteur de température selon l'une quelconque des revendications précédentes, la première pièce céramique (200) de boîtier présentant de l'oxyde d'aluminium, du nitrure d'aluminium ou du carbure de silicium.

4. Système de capteur de température selon l'une quelconque des revendications précédentes, présentant une deuxième pièce céramique (300) de boîtier, qui est reliée à la pièce supérieure (220) de la première pièce céramique (200) de boîtier et qui présente un prolongement (301) pourvu d'évidements (321), dans lesquels sont disposées et guidées au moins partiellement les alimentations électriques (4).

5. Système de capteur de température selon la revendication 4, la première et la deuxième pièce céramique (200, 300) de boîtier étant reliées l'une à l'autre par une substance d'assemblage (500), qui présente un polymère, un verre ou un adhésif céramique.

6. Système de capteur de température selon l'une quelconque des revendications précédentes, présentant un matériau de scellement (400), qui est agencé dans la pièce inférieure (210) de la première pièce céramique de boîtier et qui entoure l'élément capteur (2).

7. Système de capteur de température selon la revendication 6, le matériau de scellement (400) présentant ou étant constitué par un polymère ou un verre ou un ciment à base d'oxyde d'aluminium.

8. Système de capteur de température selon l'une quelconque des revendications précédentes, l'élément capteur (2) étant un élément capteur CTN.

9. Système de capteur de température selon la revendication 8, l'élément capteur CTN (2) présentant une structure de pérovskite de formule (Y₁₋ₓCaₓ) (Cr_{1-y}Al_{y})O₃ dans laquelle x = 0,03 à 0,05 et y = 0,85.

10. Système de capteur de température selon la revendication 8, l'élément capteur CTN (2) présentant une structure de spinelle de formule CO_{3-(x+y)}NiₓMn_{y}O₄ dans laquelle x = 1,32 et y = 1,32.

11. Procédé pour la fabrication d'un système de capteur de température selon l'une quelconque des revendications 1 à 10, comprenant les étapes suivantes :
- préparation d'un élément détecteur (1) de température ainsi que d'une première et d'une deuxième pièce céramique (200, 300) de boîtier,
- agencement de l'élément détecteur (1) de température dans la pièce inférieure (210) en forme de manchon de la première pièce céramique (200) de boîtier,
- introduction de matériau de scellement (400) dans la première pièce céramique (200) de boîtier de manière telle que l'élément capteur (2) est entouré par le matériau de scellement (400),
- agencement d'une partie des alimentations électriques (4) dans les évidements (221) d'un prolongement (301) de la pièce supérieure (220) de la première pièce céramique (200) de boîtier et
- assemblage de la pièce supérieure (220) de la première pièce céramique (200) de boîtier avec la deuxième pièce céramique (300) de boîtier au moyen d'une substance d'assemblage (500).

12. Procédé selon la revendication 11, le matériau de scellement (400) et la substance d'assemblage (500) présentant le même matériau.

13. Procédé selon l'une quelconque des revendications 11 ou 12, les alimentations électriques (4) étant assemblées au moyen de brasages durs, de sertissages ou de soudures à des lignes de raccordement (600), les lignes de raccordement (600) étant agencées partiellement dans les évidements (221) du prolongement (301) de la pièce supérieure (220) avant l'assemblage de la pièce supérieure (220) avec la deuxième pièce céramique (300) de boîtier.

14. Procédé selon la revendication 13, les lignes de raccordement (600) étant scellées dans une zone de sortie (700) de la première et/ou de la deuxième partie céramique (200, 300) de boîtier au moyen d'un polymère ou au moyen de verre.
